# EUROPEAN PATENT APPLICATION

(11) **EP 0 937 406 A2**
(43) Date of publication of application: **25.08.1999**
(21) Application number: 99500026.2
(22) Date of filing: 19.02.1999
(51) Int. Cl.: A23B 7/10, A23B 7/00, A23B 7/148

(54) **Procedure for preserving peeled and chopped fruit in impermeable containers as well as containers and preservative products used therefore**

(30) Priority: 24.02.1998 ES 9800379
(71) Applicant: Quisqueya, S.L., 08840 Viladecans (Barcelona) (ES)
(72) Inventor: Belloso, Olga Martin, 25006 Leida (ES); Pifarre, Amalia Monico, 25400 Les Borges Blanques, Lleida (ES); Caldero, Merse Sebastian, 25001 lLEIDA (ES)
(74) Representative: Perez Bonal, Bernardo

(57) **Abstract**

The invention is characterised by the mixture of ascorbic acid and/or a derivative thereof with a calcium salt, in conjunction with an impermeable container, which may be rigid, semi-rigid or flexible and made from any polymer used in the food industry to store, in a modified atmosphere and for periods of up to twenty-five days, peeled and chopped fruit.

## Description

### OBJECT OF THE INVENTION

The invention that is hereby advocated consists of a procedure for the preservation of peeled and chopped fruit in impermeable containers, as well as containers and mixture of preserving products used therefore, from among those procedures for preservation of manipulated food products that incorporate anti-oxidants and hardeners.

The invention is characterised by the mixture of ascorbic acid and/or a derivative thereof with a calcium salt, in conjunction with an impermeable container, which may be rigid, semi-rigid or flexible and made of any polymer used in the food industry to store, in a modified atmosphere and for time periods of up to 25 days, peeled and chopped fruit.

### BACKGROUND OF THE INVENTION

The current consumer preference for buying fresh products, with little treatment, without additives or preservatives has lead to an ever increasing presence on the market of types of preservation that meet certain requirements, as is the case of products packaged in a modified atmosphere, reducing the oxygen concentration and increasing that of carbon dioxide, which increases the life-time of the refrigerated product.

At the same time, this type of product (products of IV range) satisfy another type of demand, as a pre-prepared product ready to be consumed, above all in large towns and cities where the preparation time for food is limited.

A general definition of food stored in a modified atmosphere would be a perishable food-stuff stored in an atmosphere that differs from air. This definition includes conventional techniques such as packaging under vacuum, injection of gases, packaging products with a plastic film with a special permeability and without initial gaseous injection, packaging in a modified atmosphere (PMA) and hypobaric storage (Farber et al, 1993).

The deterioration of food products during their preservation is caused by several inter-related factors. It is mainly due to ageing, UV light, oxidation, enzymatic activity and growth of bacteria and moulds. Although the first two of these cannot be avoided, the rest can be inhibited or retarded by use of appropriate gases.

In the case of oxidation of the colour, which can give rise both to discoloration and colour changes of the supporting pigment of the proteins of many fresh food products sensitive to oxidation, this can have a detrimental effect of the product's appearance, reducing its commercial value.

A significant example of this phenomenon is the rapid discoloration of carotene in dried fruit and vegatables and the oxidation of phenolic compounds that cause the browning of chopped fruits (apples).

In chopped fruits the reduction of the oxygen content in the container will slow down the browning or colour change processes of the product.

The enzymatic degradation is due to the action of certain enzymes, responsible for the enzymatic browning (polyphenoloxidase enzyme) and for the product's loss of texture (pectinolytic enzymes).

In processed food these enzymes are destroyed by means of the application of thermal or chemical treatments, while in fresh foods (foods of the IV range) this is not feasible as the appearance of the product would be affected. An important aspect to take into account is that the activity of the autolytic enzymes is reduced when the food is stored in refrigeration.

While other forms of degradation can cause smells and disagreeable appearances, the growth of micro-organisms can give rise to an alteration of the product. The sanitary quality of the product is considered the most important as the health of the consumers depends on this factor. The flora that contaminates the product can be saprophiles, pathogenic and/or toxicogenic in nature.

The saprophilous germs are not dangerous for man, but they can cause sensory and hygienic qualities of the product.

The pathogenic micro-organisms can be very dangerous for man above a certain threshold infection level, and so their presence is specifically controlled. These germs are usually transmitted by poor manipulation of the food-stuffs.

There are other germs that are inoffensive in themselves but produce toxins that are dangerous for man. These are the toxicogenic flora formed by some bacteria, for example, *Clostridium botulinum* and fungi such as *Aspergillus* and *Penicillum.*

Maintaining the stored product in refrigeration and hygienic manipulation of the food-stuffs minimises the normal growth of micro-organisms. Furthermore, the use of modified atmospheres in the container inhibits considerably the growth of most degradative organisms.

Carbon dioxide is effective against moulds, some yeasts and gram (-) bacteria. Nitrogen, in that is displaces oxygen, is effective against moulds and yeasts.

For the IV range products the use of anti-oxidants such as ascorbic acid (E-300) is allowed. Ascorbic acid is used mainly in juices and chopped fruits, in small amounts, but not in whole peeled fruit as it diffuses slowly. It is used to inhibit browning as it is not toxic at its level of use.

Acting as a reducing agent, L-ascorbic acid is converted into dehydro-L-ascorbic acid to inhibit the oxidation of o-diphenols to o-quinones responsible for the dark colouring that certain fruits acquire on being cut. Ascorbic acid also acts reducing the o-quinones to phenolic subsrates thereof (Hsu et al., 1988).

When the product is in conditions of low oxygen pressure the effect of ascorbic acid on the browning is increases (Hsu et al., 1988).

Finally, cation exchangers loaded with calcium are used as a procedure to reduce by up to 30% the potassium content in fruit juices (P.I. 0339540, 1989, granted to Rainer Mobus).

Similarly, due to the loss of texture suffered by the chopped apple during its storage the possibility of adding calcium chloride as a firming agent was considered. The calcium reacts with cellular components such as the membranes and proteins of the cell wall. It also interacts with pectins to form a polymer network that increases that mechanical resistance of the product (Glenn and Poovaiah, 1990; Povaiah 1986).

The existence of preserving mixtures of ascorbic acid and/or a derivative thereof with a calcium salt, in conjunction with an impermeable container, that is rigid, semi-rigid or flexible and made from any polymer used in the food industry, to attain storage periods of around twenty days for peeled fruit and fruit chopped up into small pieces is not known.

In order to facilitate the consultation and examination of the aforementioned prior art, the most significant references are now listed:
- B.O.E. (Official State Bulletin), 5^{th} of February 1988. Order of 29^{th} of January 1988 in which the official methods for analysis of fruit juices and juices of other vegetable juices and their derivatives: 3891-3901.
- Cheftel J. and Cheftel H., 1992 "Introduction to the biochemistry and technology of food". Volume I and II. Ed. Acribia, Saragossa, Spain.
- Church N., 1994 "Developments in modified-atmosphere packaging and related technologies". Trends in Food Science and Technology, 5 : 345-352.
- Duran L., 1978. "Preservatives. Color in food technology". Rev Agroalimentaria Tecn. Alim. 20(1): 1-12.
- Farber J. Warbutron D., Laffey P., Purvis U. and Gour L., 1993. "Modified-Atmosphere Packaged Pasta. A microbiology quality assessment". Ital. J. Food Sci., 2, 157-167.
- Glenn G.M. and poovaiah B.W., 1990 "Calcium-mediated post-harvest changes in texture and cell wall structure and composition in "Golden Delicious" apples". J. Amer. Soc. Hort. Sci., 115:962.
- Hsu A.F., Shieh J.J., Bills D.D. and White D., 1988 "Inhibition of mushroom polyphenoloxidase by ascorbic acid derivatives". Journal of Food Science, 53(3): 765-771.
- Monsalve-González A., Barbosa-Cánovas, G.V. and Cavalieri R.P., 1993 "Mass transfer and textural changes during processing of apples by combined methods". Journal of Food Science, 58(0): 1-7.
- Nicoli M.C., Anese M. and Severini C., 1993. "Combined effects in preventing enzymatic browning reactions in minimally processed fruit". J. of Food Quality, 17: 221-229.
- Poovaiah B.W., 1986. "Role of calcium in prolonging storage life of fruits and vegetables". Food Technol., 29:26.
- Taylor J.E., G.B. and Tucker, G.A., 1993 "Biochemistry of fruit ripening" Ed. Chapman & Hall. London, Great Britain.
- Varoquaux P. and Wiley R.C., 1994 "Biological and biochemical changes in minimally processes refrigerated fruits and vegetables". Minimally and Processed Refrigerated Fruits and Vegetables, 6: 226-268.

### DESCRIPTION OF THE INVENTION

The invention object of the present disclosure relates to a procedure for the preservation of peeled and chopped fruit in impermeable containers, preferably apples, although other fruits such as pears, quince, etc., are not discarded. Similarly, the invention relates to the containers and a mixture of preserving products used for these purposes, from among preserving procedures of manipulated food products, for example, those peeled and chopped, that incorporate anti-oxidant products and those that incorporate firming products.

The invention is characterised by the mixture of ascorbic acid and/or its salts with a calcium salt, in conjunction with an impermeable container, that is to say, with a certain degree of impermeability towards oxygen, carbon dioxide and water vapour in predefined test conditions, with a semi-rigid finish in the form of a pot or something similar, such as a bag, made from a material used in the food industry, to maintain in the modified atmosphere and for periods of up to twenty-four days, the aforementioned fruits, already peeled and chopped.

### DESCRIPTION OF THE DRAWINGS

To complete the description that is being carried out and with a view to facilitating the best and most easy understanding of the characteristics of the invention, the present disclosure, as an integral part thereof, is accompanied by a set of figures in which, for illustrative purposes and never of limiting character, the following has been represented:

Figure 1 shows a diagram with the procedure followed for the processing of the apples in accordance with the preferred example.

### PREFERRED EMBODIMENT OF THE INVENTION

In view of what has been stated, the present invention relates to a procedure for the preservation of peeled and chopped fruit in impermeable containers, as well as containers and mixture of preserving products used therefore, from among the preserving procedures of food products manipulated in containers or plastic films of special permaebility, that incorporate anti-oxidant products and firming agents.

The invention is characterised by the mixture of ascorbic acid and/or a derivative thereof, as an anti-oxidant, along with a calcium salt as a firming agent, in conjunction with an impermeable container, which may be rigid, semi-rigid or flexible, made from any polymer used in the food industry, to store in modified atmosphere, and for periods of up to twenty-five days, peeled and chopped fruit.

The experiments established a minimum period of conservation of 10 days and, during these days, it was attempted to maintain the physical-chemical, nutritional and sensory characteristics of the initial fresh product.

### 1. MATERIAL AND METHODS

The work was carried out with apples of the Golden Delicious variety, with the following characteristics:
- Activity in water (Cl) 0.985
- pH 3.98 ± 0.02
- Soluble solid content (°Brix) 15.35 ± 0.05
- Total acidity (g citric acid/100 g) 0.342 ± 0.106
- Humidity content (%) 85.14 ± 0.20
- Dry extract (%) 14.83 ± 0.10
- Maximum force (N) 14.13 ± 3.84
- Adhesivity (N · s) 0.0432 ± 0.0173
- Hardness (N) 23.59 ± 5.15

Similarly, and with the aim of determining the optimum ripeness of the apples for processing, the following analyses were carried out:
- Soluble solid content
- Acidity
- Humidity
- Dry extract
- Firmness

The procedure followed for the processing of the apples is represented in schematic form in figure 1. Once the apples had been received (I) they were washed (II) and then peeled (III), the cores removed (IV) and chopped up (V), in this example, in cylinders of 1.5 cm diameter and a height of approximately 1 cm.

Once chopped up (V) they were submerged (VI) in a stirred bath, in this example, of ascorbic acid (1) and calcium chloride (2), at concentrations of 1% and 0.5% respectively, at a proportion of pieces of apple (3) : bath of 1 : 2, the pieces of apple (3) remaining in the bath for a period of 1 minute.

After the bath the pieces of apple (3), incorporating the ascorbic acid (1) and the calcium chloride (2) were drained (VIII) and dried (VIII) with absorbent tissue paper to eliminate excess humidity. After this, they were packaged (IX) in bags of polyethylene of different permeabilities with injection of different gaseous mixtures.

The modified atmospheres tried were the following:
- Packaged under vacuum.
- Packaged with 100% nitrogen.
- Packaged with 5% oxygen, 10% carbon dioxide and 85% nitrogen.
- Packaged with 2.5% oxygen, 7% carbon dioxide and 89.5% nitrogen.

The combinations of gas mixes and packaging film tried are represented schematically in table 1.

**Table 1. -**

| Combinations of the different plastics and gas mixes tried during the course of this study. | | | |
|---|---|---|---|
| Combination | Type of plastic, polyethylene, from CRYOVAC | Modified atmosphere | Storage temperature (°C). |
| 1 | BT300 | Vacuum | 4 ± 0.5 |
| 2 | BB4L | Vacuum | 4 ± 0.5 |
| 3 | BT300 | 5% O₂ and 10% CO₂ | 4 ± 0.5 |
| 4 | BB4L | 100% N₂ | 4 ± 0.5 |
| 5 | BT300 | 100% N₂ | 4 ± 0.5 |
| 6 | BT300 | 2.5% O₂ and 7% CO₂ | 4 ± 0.5 |
| 7 | BB4L | 2.5% O₂ and 7% CO₂ | 4 ± 0.5 |

Bags with a surface area of 420 cm² were also prepared that contained approximately 100 grams of product and, once the samples had been prepared, these were stored at 4 ± 0.5° C. Periodically, every 3 days approximately, two bags of each combination were selected at random and the following analyses carried out.

Microbiological analyses (XI). Counts of the total number of mesophyll aerobic micro-organisms according to the International Guidelines ISO 4833:1991 (F) and counts of yeasts and moulds according to the International Guidelines ISO 7954:1987 (F).
- Total ascorbic acid content (XII). The determination was carried out using high performance liquid chromatography, for ascorbic acid. This is an adaptation of the method that can be found in the BOE number 31 of 1998, in which official methods for the analysis of juices of fruits and other vegetables and their derivatives are described.
- Texture (XIII). The texture tests, carried out with the texture-meter TA-XT2, were the following:
   - Penetration test. For this test a cylindrical steel rod of 4 mm diameter was used. To carry out the test 6 cylindrical samples were taken from the apple of 1.5 cm diameter and with a height of 1.5 cm. The penetration was carried out along the vertical axis of each cylinder of the apple.
   - Analysis of the texture profile (Texture profile analysis or TPA). This test was carried out with a cylindrical steel rod with a diameter of 2.5 cm. 6 samples of apple were used as in the previous test.

- Polyphenoloxidase activity (XIV). In order to determine the polyphenoloxidase activity, firstly an extraction of the polyphenoloxidase enzyme was carried out using a buffer solution made up of 0.2 M sodium di-phosphate, 0.1 M citric acid at pH = 6.5 to which NaCl was added until obtaining a 1 M solution and polyvinylpolypyrrolidine.
   - The polyphenoloxidase activity was obtained after bringing the enzyme extract into contact with a substrate (catecol). The increase in absorption that is produced by the oxidation reaction of the substrate by the enzyme was measured with a PU 8700 Philips spectrophotometer. From the increases in absorption the activity of the aforementioned enzyme was determined.

- Colour measurements (XV). The colour measurements were carried out by using a McBeth Color-Eye 3000 spectrophotometer. From the measured reflectance values, the corresponding colorimetric parameters a*, b* and L* were obtained for the standard light source D₇₅ and the observation angle of 10°.
- Sensory analysis (XVI): the colour, texture and degree of acceptance of the chopped apple have been evaluated by a panel of 45 judges. For this purpose tests measuring the degree of satisfaction were devised, with descriptive hedonistic scales ranging from 1 to 9 points, in which each one was marked by a descriptive expression that reflected the intensity of the acceptance or rejection sensation caused by the sample. The hedonistic scale used was defined from 1 to 9 in increasing order of acceptance for each judge, with a session of tests of seven apple samples carried out. These samples corresponded to each combination after the apples had been stored for a time period of 15 days.

The evaluations were carried out in the Cata Hall of the Department of Food Technology of the University of Lleida. The samples were codified with a three-digit number taken from a table of random numbers. The members of the panel had water to wash out their mouths between samples.

### 4.-CONCLUSIONS

1.- With regard to the sensory analysis, the judges considered that the apple chopped and packaged under vacuum did not have the same firmness as the other apples and the flavour was rather disagreeable.
   The rest of the combinations were, in general, well received, but the combinations packaged with 100% nitrogen and impermeable plastic BT300 and BB4L were the ones that received the most positive evaluation, as the acidic taste was more similar to the fresh fruit.
2.- From the point of view of the colorimetric test all the combinations tested maintain the colour of the fresh product (pale yellow) during, at least, 25 days of preservation except, the combination packaged with 5% oxygen and 10% carbon dioxide and with BT300 plastic.
   In the combinations packaged with 100% nitrogen the relative luminosity is maintained more constant than in the combinations packaged with oxygen.
   In general, the combinations packaged under vacuum show more yellow colouring and a more disagreeable aspect than those packaged under other conditions.
3.- All the combinations show a constant firmness, hardness, brittleness and adhesivity during the period of storage, with the values being similar to those of fresh fruit.
4.- The ascorbic acid content is maintained constant (around 700 and 800 ppm) in those combinations packaged in the absence of oxygen. In the combination packaged with 5% oxygen and 7% carbon dioxide the content of ascorbic acid reduces more notably, reaching values equal to or less than 200 ppm. The reduction in the ascorbic acid content is due mainly to it being oxidised in the presence of oxygen.
5.- The activity of the polyphenoloxidase enzyme does not depend on the packaging conditions and shows some very variable values, both comparing different combinations and for the same combination.
6.- From the microbiological point of view, the "Journal Officiel de la Republique Français" of the 22^{nd} of March 1993 was followed with respect to the hygiene guidelines applicable to vegetables and the preparations of vegetables ready for use and consumption. In chapter IV the microbiological and hygienic characteristics of the products are established can be found, which form the basis of the Ministry of Spanish Health and Consumption Ministry microbiological guidelincs for foods prepared and packaged based on raw vegetables. The monitoring was carried out every 3 or 4 days giving the following results as the stable combinations during the 25 days of storage at refrigerator temperature:
   - The containers with 100% nitrogen and the two types of plastic (CRYOVAC BT300 and BB4L).
   - The combination packaged under vacuum and with BB4L plastic.
   - The combinations packaged with 2.5% oxygen and 7% carbon dioxide and with the two plastic types (CRYOVAC BT300 and BB4L).

   The rest of the combinations are stable for about 18 days of storage at refrigerator temperature. As for the yeast and mould counts for each combination, these are relatively low in every case.
   - Depending on the fruit chosen and its variety, the concentrations can vary from 0.1 to 3 % and from 0.05 to 2 %, of ascorbic acid (1) and calcium chloride (2) respectively, maintaining the proportion of fruit pieces (3): bath of the order of around 1:2, while the time the pieces of fruit (3) remain in the bath can vary from 1 to 3 minutes, whatever the polymeric material used or its structure, flexible for bags and rigid or semi-rigid for pots with regular or irregular geometric forms.

The description is not made any more extensive, on the understanding that anyone skilled in the art would have enough material to understand the scope of the invention and the advantages derived thereof, who could reproduce the experiments described herein.

The terms used during the description and the sense that they are considered to have should always be considered in a non-limiting way.

## Claims

1. Procedure for the preservation of peeled and chopped fruit in impermeable containers, from among the procedures of preservation of manipulated food products packaged in containers or impermeable plastic films, that incorporate anti-oxidant and firming products, essentially characterised by mixing ascorbic acid and/or a derivative thereof at concentrations of from 0.1 to 3 % with a salt of calcium at concentrations of from 0.05 to 2 %, the proportion of pieces of fruit (3) with respect to the bath being of the order of 1 : 2. The time the pieces of fruit (3) remain in the bath is from 1 to 3 minutes. The container is impermeable, rigid, semi-rigid or flexible, and made from any polymer used in the food industry, storing the peeled and chopped fruit in a modified atmosphere for periods of up to twenty-five days, maintaining the physical-chemical, nutritional and sensory characteristics of the initial fresh product.

2. Procedure for preserving peeled and chopped fruit in impermeable containers, according to the first claim, characterised in that the once the fruits are received (I) they are washed (II) and then peeled (III), the cores removed (IV) and chopped up (V), to then be submerged (VI) in a stirred bath of ascorbic acid (1) and calcium chloride (2), then, afterwards, they are dried (VIII) to eliminate excess humidity, before being packaged (IX), in the rigid, semi-rigid or flexible containers made from impermeable polymeric material and filling the rest of the container with an injection of 100% nitrogen.

3. Procedure for the preservation of peeled and chopped fruit in impermeable containers, according to the preceding claims, characterised by substituting the nitrogen with a mixture thereof with 10% carbon dioxide and a percentage of oxygen less than 5%.

4. Flexible polymeric containers, according to the first claim, characterised in that the containers are in the form of bags and are, preferably, made from polyethylene CRYOVAC BT300 and BB4L.

5. Semi-rigid and rigid polymeric containers, according to the first claim, characterised in that the containers are preferably made from polyethylene and are configured as pots with geometrically regular or irregular forms.
